# EUROPEAN PATENT SPECIFICATION

(11) **EP 1 638 286 B1**
(45) Date of publication and mention of the grant of the patent: **14.12.2011**
(21) Application number: 04255699.3
(22) Date of filing: 18.09.2004
(51) Int. Cl.: H04L 29/06, H04M 7/00

(54) **IP telephony apparatus providing simultaneous SIP communication for multiple IP phones and method for the same**
Vorrichtung und Verfahren für Telefonieren über IP, welche die SIP-Kommunikation für mehrere IP-Endgeräte gleichzeitig ermöglicht
Appareil et méthode de telephonie IP permettant des communications SIP simultanées par une pluralité de téléphones IP

(43) Date of publication of application: 22.03.2006
(73) Proprietor: ZyXEL Communications Corporation, Hsin-Chu, Taiwan (TW)
(72) Inventor: Chen, Chi-Wen, Hsinchu City 300 (TW)
(74) Representative: Viering, Jentschura & Partner

(56) References cited:
- WO-A1-02/058351
- US-A1- 2003 161 453
- US-A1- 2004 105 432
- ZYXEL COMMUNICATIONS CORP: "Prestige 2002 Series - VoIP Analog Telephone Adapter"[Online] 14 August 2004 (2004-08-14), pages 1-2, XP002315117 Retrieved from the Internet: URL:ftp://ftp.zyxel.com/P-2002_Series/docu ment/P-2002_Series_V.1_Datasheet.pdf>

## Description

### BACKGROUND OF THE INVENTION

### 1. Field of the Invention

The present invention relates to an IP telephony apparatus providing simultaneous communication for multiple IP phones and methods for the same, especially to an IP telephony apparatus providing simultaneous SIP communication for multiple IP phones by using only one SIP number and a method for the same.

### 2. Description of Prior Art

The progress of Internet technology provides innovative ideas and new services. For example, the VoIP (Voice over Internet Protocol) technique provides telephony communication through IP network and the expensive long-distance call fee can be saved. More particularly, the VolP technique provides PC-to-PC telephony communication through IP network, PC-to-Phone telephony communication through PBX (private branch box), Phone-to-Phone telephony communication through ISP gateway and Device-to-Device telephony communication through IP Phones.

The VoIP technique provides suitable telephony signal and voice transmission for conveying phone call through IP network. The VoIP technique sends telephony signal with specific protocol to represent user status and to establish communication for user. Once the communication is established for user, the voice is compressed and digitalized to transmit in the form of digital signal.

The conventional telephony signals such as dialing signals, ringing signal, and busy signal are converted into data packets according to VoIP protocol and the data packets are sent to remote user through IP network. The data packets are then converted to analog telephony signal by remote IAD or ATA for the operation of remote telephone set.

After the connection is established, the analog voice is sent to a local router through a telephone set, a fax or a PBX. The analog voice is compressed and digitalized into data packets and the data packets are sent to remote router through IP network. The data packets are converted to analog voice signal by the remote router and then sent to remote user through a telephone set, a fax or a PBX. The user can make cheaper long-distance phone call using VoIP technique through omnipresent IP network instead of the conventional PSTN system.

The present VoIP technique is regulated by ITU (International Telecommunication Union) and the earlier protocol such as H323/H248 are defined for LAN rather than the open environment of Internet. Therefore the H323/H248 protocol has limited application and complicated conversion for PSTN system. A new protocol, namely SIP (Session Initiation Protocol) protocol, is defined by IETF (Internet Engineering Task Force) to fully exploit the Internet service and provide better integration of Internet and PSTN system.

The SIP protocol belongs to the application layer protocol in the seven-layer architecture of the OSI (Open System Interface) and is resemblant to the Client-Server structure in HTTP protocol. Therefore, the SIP protocol can utilize existing HTTP packet structure for sending command and data and can be adapted for data transmission in WAN.

In present VoIP telephone system, a UA ((User Agent) such as a VoIP gateway is need to install at user side and at least one call server should be installed at VoIP agent. Moreover, the VoIP user needs to register an SIP VoIP number to the VoIP agent. Therefore, other VoIP user can call him through the SIP VoIP number.

US2004/0105432, US2003/0161453 and WO02/058351 disclose apparatuses and methods supporting IP telephony.

However, the nowadays VoIP gateway generally uses VoIP H323/H248 protocol and a VoIP telephone set such as a USB telephone set is required. When the VoIP gateway is connected to multiple VoIP telephone sets, each of the VoIP telephone set needs a unique SIP VoIP number to prevent blocked call. Therefore, the conventional VoIP gateway needs at least two SIP VoIP numbers for two VoIP telephone sets to prevent blocked call.

### SUMMARY OF THE INVENTION

It is an object of the present invention to provide an IP telephony apparatus providing simultaneous SIP communication for multiple IP phones by using only one SIP number and a method for the same, wherein a call-leg is used to designate different SIP. The call-leg is established only when an SIP number is dialed in or our. The SIP call-leg can be dynamically created with no limitation on number thereof, whereby simultaneous SIP communication for multiple IP phones can be provided without blocked problem.

To achieve the above object, the present invention provides an IP telephony apparatus provides simultaneous SIP communication for multiple IP phones. The IP telephony apparatus comprises a network connection port connected to a network; a plurality of telephone connection ports connected to a plurality of telephone sets; a voice codec unit connected to the telephone connection ports and used for converting a voice signal to a digital voice packet and for converting a digital voice packet to a voice signal; and an IP telephony allocation unit connected to the network connection port and the plurality of telephone connection ports. The IP telephony allocation unit creates an SIP control block containing an SIP call-leg for a local SIP number, and allocates the SIP control block to a destination telephone set according to the SIP call-leg, whereby the telephone sets have bi-directional digital voice packet transmission with a remote SIP number.

To achieve the above object, the present invention provides a method providing simultaneous phone dialing for multiple IP phones. The method comprises the steps of: (a) dialing a remote SIP number with at least one telephone set; (b) finding a local SIP number for communication with the remote SIP number by a mapped policy means; (c) creating at least one SIP control block containing an SIP call-leg for the local SIP number; and (d) allocating the SIP control block to the dialing telephone set according to the SIP call-leg and establishing a bi-directional digital voice packet transmission between the dialing telephone set and the remote SIP number. When one telephone is using, other telephones can establish new SIP control block with SIP call-leg to dial out and will not suffer to the blocked problem.

To achieve the above object, the present invention provides a method providing simultaneous call receiving for multiple IP phones. The method comprises the steps of: (a) receiving a phone call from a remote SIP number for calling a local SIP number; (b) creating at least one SIP control block containing an SIP call-leg for a telephone group containing a plurality of telephone sets for making a ringing for all telephone sets in the telephone group; (c) when a telephone set of the telephone group being off hook, allocating the SIP control block to the off-hook telephone set and blocking the SIP control block from connecting to other telephone sets to establish a bi-directional digital voice packet transmission between the off-hook telephone set and the remote SIP number. When one telephone is using, the local SIP number for other telephones can establish new SIP control block with SIP call-leg to receive phone call and will not suffer to the blocked problem.

To achieve the above object, the present invention provides a method providing simultaneous call dialing and call receiving for multiple IP phones. The method combines the procedures mentioned in above two paragraphs and comprises following steps: dialing a remote SIP number with at least one telephone set; creating at least one SIP control block containing an SIP call-leg for the local SIP number; allocating the SIP control block to the dialing telephone set according to the SIP call-leg and establishing a bi-directional digital voice packet transmission between the dialing telephone set and the remote SIP number; when a remote SIP number call the local SIP number, at least one SIP control block containing an SIP call-leg is created for a telephone group for making a ringing for all telephone sets in the telephone group; (c) when a telephone set of the telephone group being off hook, allocating the SIP control block to the off-hook telephone set and blocking the SIP control block from connecting to other telephone sets to establish a bi-directional digital voice packet transmission between the off-hook telephone set and the remote SIP number. The procedure is similar for a telephone group firstly receiving a phone call and then dialing a phone call.

The above summaries are intended to illustrate exemplary embodiments of the invention, which will be best understood in conjunction with the detailed description to follow, and are not intended to limit the scope of the appended claims.

### BRIEF DESCRIPTION OF DRAWING:

The features of the invention believed to be novel are set forth with particularity in the appended claims. The invention itself however may be best understood by reference to the following detailed description of the invention, which describes certain exemplary embodiments of the invention, taken in conjunction with the accompanying drawings in which:
Fig. 1 shows an application of the IP telephony apparatus according to the present invention.
Fig. 2 shows a block diagram of the IP telephony apparatus according to the present invention.
Fig. 3 shows an application of the present invention.
Fig. 4 shows a flowchart of dialing phone call through the IP telephony apparatus according to the present invention.
Fig. 5 shows a flowchart of receiving phone call through the IP telephony apparatus according to the present invention.
Fig. 6 shows the flowchart of communication procedure for the present invention.

### DETAILED DESCRIPTION OF THE INVENTION

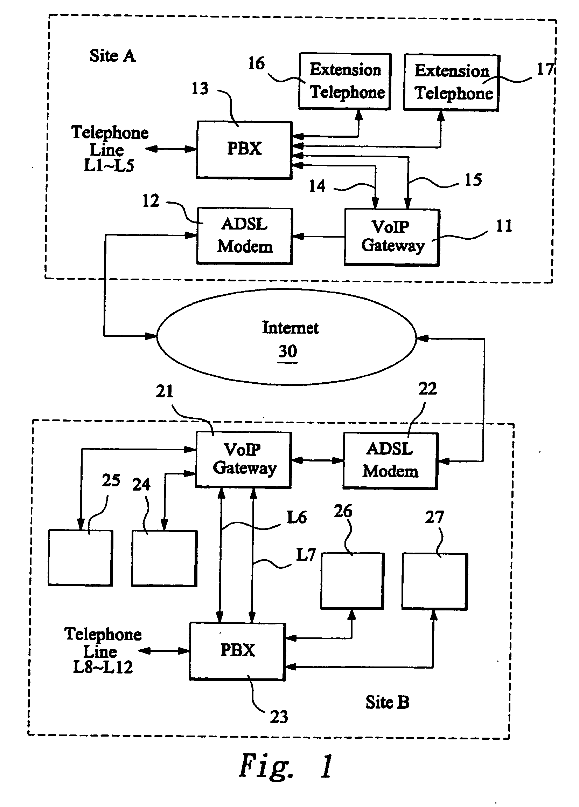

Fig. 1 shows an application of the IP telephony apparatus according to the present invention. The IP telephony apparatus according to the present invention provides busy-free communication for multiple VoIP telephone sets by using only one VoIP telephone number. The IP telephony apparatus according to the present invention adopts SIP VoIP protocol and can be an IP phone gateway, an ADSL modem, an ADSL router, a cable modem or a wireless network access point, etc.

The IP telephony apparatus according to the present invention supports two interface standards, namely, an FXS (Foreign eXchange Station) interface standard and an FXO (Foreign eXchange Office) interface standard. The FXS interface standard produces an FXS simulation signal for simulating a PSTN telephone line signal, and the FXS simulation signal can be connected to any PSTN telephony facility such as telephone set, wireless telephone set, fax or PBX.

The FXO interface standard generates an FXO simulation signal for simulating a PSTN facility signal and the FXO simulation signal can be connected to PSTN telephone line or extension line of PBX. In Fig. 1, the IP telephony apparatus according to the present invention has above-mentioned two interface standards and is connected between site A and site B.

In Fig. 1, the site A is a company in China and uses an FXO VoIP gateway **11** for accessing Internet **30** through an ADSL modem **12.** The FXO VoIP gateway **11** is connected to a PBX **13** through extension lines **14, 15** and the PBX **13** is connected to a plurality of PSTN telephone lines **L1-L5** and a plurality of extension telephones **16, 17.**

In Fig. 1, the site B is a company in Taiwan and uses an FXS VoIP gateway **21** for accessing Internet **30** through an ADSL modem **22.** The FXS VoIP gateway **21** is connected to a plurality of telephone sets **24, 25** and connected to a PBX **23** through telephone lines **L6-L7**. The FXS VoIP gateway **21** is connected to a plurality of extension telephones **26, 27** and a plurality of PSTN telephone lines **L8-L12** through the PBX **23**.

When a user at site B makes a phone call to site A, the phone is transferred from Taiwan to China through Internet instead of international telephony network. The user at site B also can make phone call to other places in China through the PBX **13** at site A. In this situation, the user at site B only pays local-call fee, which is similar to domestic call fee in China.

When a user at site A makes a phone call to site B, the user at site A will hear dial tone and the telephone sets **24**, **25** at site B will ring simultaneously. The user at site A (China) can make phone call to any place in Taiwan through the PBX **23** at side B and vice versa. This means that the a call in Taiwan can be transferred to site A through telephone line to PBX **23** and Internet, just like domestic call in Taiwan.

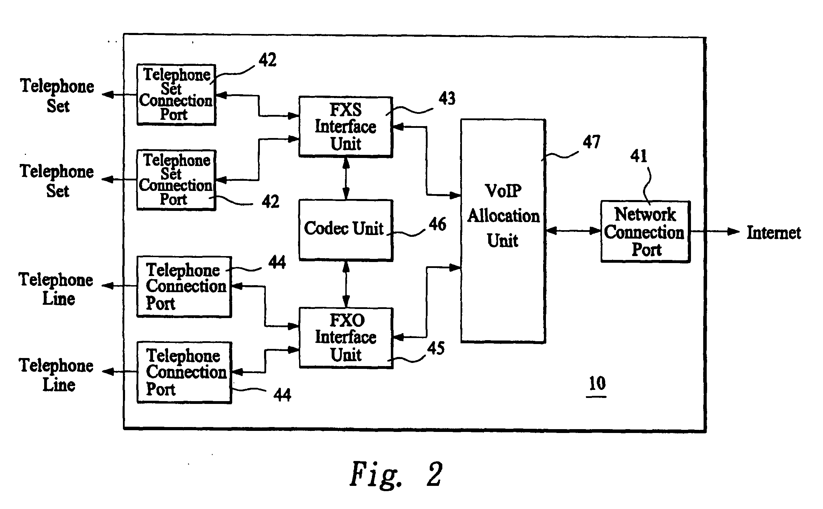

Fig. 2 shows a block diagram of the IP telephony apparatus **10** according to the present invention. As shown in this figure, the IP telephony apparatus **10** comprises a network connection port **41**, a plurality of telephone set connection ports **42,** an FXS interface unit **43,** a plurality of telephone connection ports **44,** an FXO interface unit **45,** a codec unit **46** and a VolP allocation unit **47.**

The network connection port **41** can be an RJ-45 jack for connecting a network such as Internet or connecting a network through a network device. The telephone set connection port **42** can be a PSTN RJ-11 jack for connecting to telephony facilities such as telephone set, wireless handset, fax or PBX, etc.

The FXS interface unit **43** is connected between the telephone set connection ports **42** and the codec unit **46** and is used to produce an FXS simulation signal for simulating a PSTN telephone line signal. Therefore, the telephone set connection ports **42** can be directly connected to telephone set, fax or PBX telephone line.

The telephone connection ports **44** are connected to PBX extension line or telephone line of central exchange. The FXO interface unit **45** is connected between the telephone connection ports **44** and the codec unit **46** and is used to produce an FXO simulation signal for simulating a PSTN facility signal.

The codec unit **46** is a DSP unit to convert voice signal from telephone line or telephone into digital SIP packet and to convert digital SIP packet into voice signal.

The VoIP allocation unit **47** is an SIP processor and connected among the network connection port **41,** the FXS interface unit **43** and the FXO interface unit **45.** The VoIP allocation unit **47** is functioned to process SIP packet for SIP VoIP phone call and allocate the connection between SIP service and physical phone. The VoIP allocation unit **47** establishes at least one control block in a local SIP number and the control block has a call leg. The call leg includes a call from field, a call to field and a call-ID field.

The VoIP allocation unit **47** allocates an SIP control block to any unused telephone set according to the call-leg and the telephone set allocated with the SIP control block can establish duplex voice packet transmission with external SIP number.

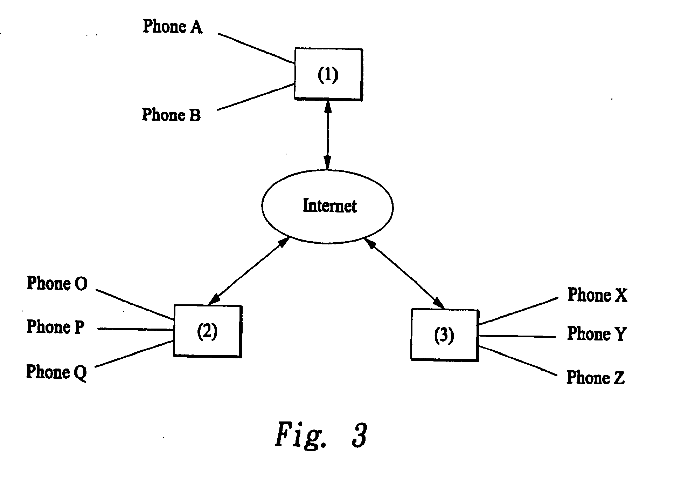

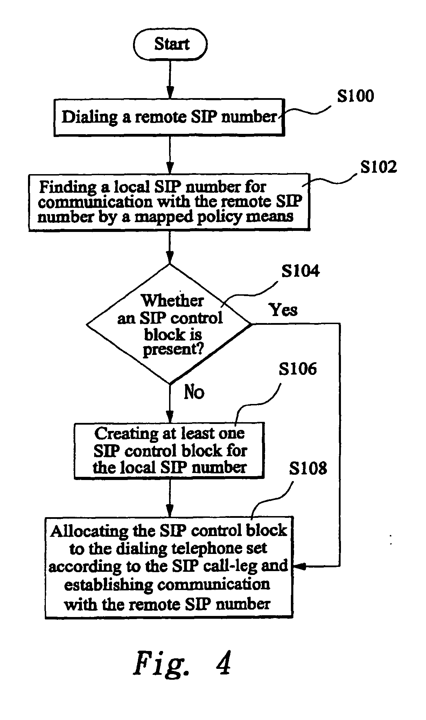

Fig. 3 shows an application of the present invention. Fig. 4 shows a flowchart of dialing phone call through the IP telephony apparatus according to the present invention. Fig. 4 shows a flowchart of receiving phone call through the IP telephony apparatus according to the present invention.

In this example, the IP telephony apparatus according to the present invention is used in site (1), site (2) and site (3) for accessing Internet. There are two phones (phone A and phone B) at site (1); three phones (phone O, phone P and phone Q) at site (2); and three phones (phone X, phone Y and phone Z) at site (3). In this example, each of the site (1), the site (2), and the site (3) is assigned with one SIP number.

As shown in Fig. 3, when the phone A at site (1) is off hook for dialing an SIP number at site (2) in step **S100,** the IP telephony apparatus **10** at site (1) finds an SIP number at site (1) by a mapped policy means for establishing communication link with the SIP number at site (2) in step **S102**. In this situation, there are multiple SIP numbers at site (1), and one of the multiple SIP numbers at site (1) is selected for communication.

The IP telephony apparatus **10** at site (1) then examines whether an unused control block is present in the selected SIP number in step **S104.** If an unused control block is not present, a new SIP control block is created in the SIP number at site (1) in step **S106** and the SIP control block has an SIP call-leg. The SIP call-leg includes a call from field, a call to field and a call-ID field.

If an unused control block is present, the step of creating new SIP control block is skipped and the unused control block is used to set new SIP call-leg. The SIP call-leg includes a call from field, a call to field and a call-ID field.

The SIP control block is allocated to the phone A at site (1) in step S108 and SIP packet is sent to the IP telephony apparatus **10** at site (2) according to the SIP control block.

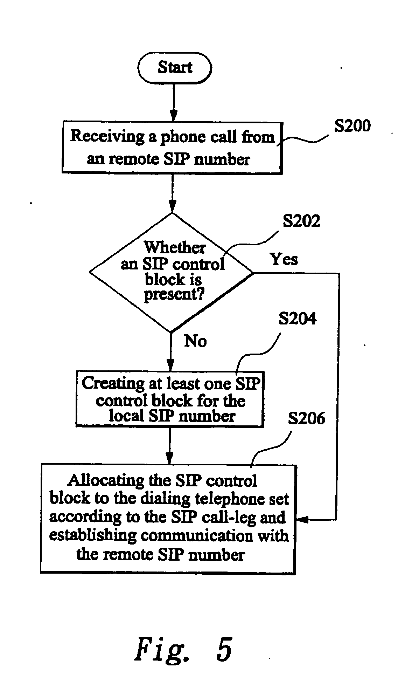

As shown in Fig. 5, the IP telephony apparatus **10** at site (2) receives the SIP packet and resolves the SIP call-leg therein. The IP telephony apparatus 10 at site (2) finds the SIP call-leg indicating the SIP number at site (1) calling an SIP number at site (2) in step **S200.** The IP telephony apparatus **10** at site (2) will examine whether an unused SIP control block is present in step **S202.** If an unused control block is not present, a new SIP control block is created in the SIP number at site (2) in step **S204** and the SIP control block has an SIP call-leg.

If an existing SIP control block is present or an unused SIP control block is present, the step of creating new SIP control block is skipped and the existing SIP control block is used to set new SIP call-leg. The SIP call-leg includes a call from field, a call to field and a call-ID field.

The IP telephony apparatus **10** at site (2) then allocates the SIP control block to the phone O, phone Pa and phone Q such that all the three phones will ring in step **S206**. At this time a ring-back signal is sent to the IP telephony apparatus **10** at site (1) and the user of phone A receives a ring-back tone.

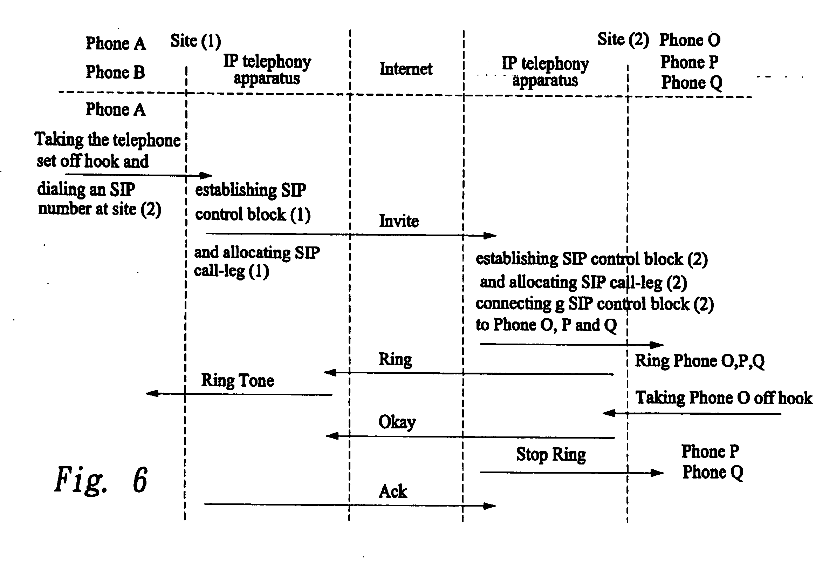

When the phone O enters an off-hook state, the IP telephony apparatus **10** at site (2) ceases the ring tone for phone P and phone Q and allocates the SIP control block to phone O. The IP telephony apparatus 10 at site (2) further breaks the connection of the control block to phone P and phone Q and sends an Okay signal to IP telephony apparatus **10** at site (1) for permitting conversation. The IP telephony apparatus **10** at site (1) will respond an ACK (acknowledgement) signal to the IP telephony apparatus **10** at site (2). Afterward, the terminal at site (1) has bi-directional voice packet transmission with the terminal at site (2). Namely, the phone A at site (1) has telephony communication with the phone O at site (2). Fig. 6 shows the flowchart of communication procedure between site (1) and site (2).

When the phone A at site (1) has telephony communication with the phone O at site (2), the phone B at site (1) still can dial an SIP number or receive phone call from another SIP number. The telephony communication of the phone B at site (1) will not be blocked by the telephony communication between the phone A at site (1) and the phone O at site (2). The phone B can establish telephony communication by creating new SIP control block with new SIP call-leg.

For example, when the phone B at site (1) dials an SIP number at site (3), all the phone X, phone Y and phone Z at site (3) will ring simultaneously. If the phone X at site (3) is off-hook, the telephony communication between the phone B at site (1) and the phone X at site (3) is established. At this time, the telephony communication between the phone A at site (1) and the phone O at site (2) is not bothered.

Similarly, when the phone Y at site (3) dials an SIP number at site (2), the IP telephony apparatus **10** at site (2) will create new SIP control block for the phone P and phone Q, while the phone O at site (2) is busy talking with phone A. The phone P and phone Q will ring and one of them establishes telephony communication with the phone Y at site (3).

Furthermore, when the phone Z at site (3) dials an SIP number at site (1), the users of phone A and phone B hear call-waiting tone and the users can switch their telephony communication to phone Z at site (3) by pressing a specific key such as transfer key or flash key. The specific key is pressed again to return to original communication. More over, the users phone A and phone B can press special key to cease the connection of the SIP control block from the phone Z, Therefore the users of phone A and phone B will not be bothered by the new coming call.

Although the present invention has been described with reference to the preferred embodiment thereof, it will be understood that the invention is not limited to the details thereof. Various substitutions and modifications have suggested in the foregoing description, and other will occur to those of ordinary skill in the art. Therefore, all such substitutions and modifications are intended to be embraced within the scope of the invention as defined in the appended claims.

## Claims

1. An IP telephony apparatus providing simultaneous SIP communication for multiple telephones used as IP phones, the IP telephony apparatus (10) comprising:
a network connection port (41) connected to a network;
a plurality of telephone connection ports (42) connected to a plurality of telephone sets; and
a voice codec unit (46) connected to the telephone connection ports (42) and used for converting a voice signal to a digital voice packet and for converting a digital voice packet to a voice signal;
the IP telephony apparatus **characterized by** comprising an IP telephony allocation unit (47), which is connected to the network connection port (41) and the plurality of telephone connection ports (42), wherein the IP telephony allocation unit (47) is adapted to create an SIP control block containing an SIP call-leg for a local SIP number, and to allocate the SIP control block to a destination telephone set according to the SIP call-leg, wherein the telephone sets are enabled by the IP telephony apparatus to engage in bi-directional digital voice packet transmission with a remote SIP number.

2. The IP telephony apparatus as in claim 1, wherein the IP telephony apparatus (10) is one of IP gateway, ADSL modem, cable modern and a wireless network access point.

3. The IP telephony apparatus as in claim 1, wherein the network is Internet.

4. The IP telephony apparatus as in claim 1, wherein the net connection port (41) is an RJ-45 jack.

5. The IP telephony apparatus as in claim 1, wherein each of the telephone connection port (42) is a PSTN R1-1 jack.

6. The IP telephony apparatus as in claim 1, wherein the voice codec unit (46) is a digital signal processor.

7. The IP telephony apparatus as in claim 1, further comprising:
an FXS (Foreign exchange Station) interface unit (43) connected between the telephone connection ports (42) and the voice codec unit (46) and producing an FXS simulation signal for simulating a PSTN telephone line signal, whereby the telephone connection ports (42) are directly connected to telephone set, fax or telephone line of PBX.

8. The IP telephony apparatus as in claim 1, further comprising:
a plurality of telephone line connection ports (44) to extension lines of PBX or telephone line of central exchange; and
an FXO (Foreign exchange Office) interface unit (45) connected between the telephone line connection ports (44) and the voice codec unit (46) and producing an FRO simulation signal for simulating a telephone set signal.

9. The IP telephony apparatus as in claim 1, wherein the IF telephony allocation unit (47) is an SIP professor to process SIP phone packet.

10. The IP telephony apparatus as in claim 1, wherein the SIP call-leg comprises a call from field, a call to field and a call-ID field.

11. A method providing simultaneous communication for multiple telephones used as IP phones, the method being used for an IP telephony apparatus (10) connected to a network and plurality of telephone sets, the IP telephony apparatus (10) adopting SIP protocol and using a local SIP number for communication, the method comprising the steps of
(a) dialing a remote SIP number with at least one telephone set;
(b) finding a local SIP number for communication with the remote SIP number by a mapped policy means;
the method **characterized by**
(c) creating at least one SIP control block containing an SIP call-leg for the local SIP number; and
(d) allocating the SIP control block to the dialing telephone set according to the SIP call-leg and establishing a bi-directional digital voice packet transmission between the dialing telephone set and the remote SIP number.

12. The method as in claim 11, wherein the IP telephony apparatus (10) is one of IP gateway, ADSL modem, cable modern and a wireless network access point.

13. The method as in claim 1, wherein the network is Internet.

14. The method as in claim 11, wherein the telephone set is a PSTN telephone set.

15. The method as in claim 11, wherein the SIP call-leg in step (c) comprises a call from field, a call to field and a call-ID field.

16. The method as in claim 11, further comprising steps before the step (c):
examining whether an SIP control block is present;
executing the step (c) if the SIP control block is not present; and
skipping the step (c) and executing the step (d) if the SIP control block is prevent.

17. A method providing simultaneous communication for multiple telephones used as IP phones, the method being used for an IP telephony apparatus (10) connected to a network and a plurality of telephones sets, the IP telephony apparatus (10) adopting SIP protocol and using a local SIP number for communication, the method comprising the steps of:
(a) receiving a phone call from a remote SIP number for calling a local SIP number;
the method **characterized by**
(b) creating at least one SIP control block containing an SIP call-leg for a telephone group containing a plurality of telephone sets for making a ringing for all telephone sets in the telephone group;
(c) when a telephone set of the telephone group being off book, allocating the SIP control block to the off-hock telephone set and blocking the SIP control block from connecting to other telephone sets and blocking the SIP control block from connecting the other telephone sets to establish a bi-directional digital voice packet transmission between the off-hook telephone set and the remote SIP-number.

18. The method as in claim 17, wherein the IP telephony apparatus (10) is one of IP gateway, ADSL modem, cable modem, and a wireless network access point.

19. The method as in claim 17, wherein the network is Internet.

20. The method as in claim 17, wherein the telephone set is as PSTN telephone set.

21. The method as in claim 17, wherein the SIP call-leg comprises a call from field, a call to field and a call-ID field.

22. The method as in claim 17, further comprising steps before the step (b):
examining whether an SIP control block is present;
executing the step (b) if the SIP control block is not present; and
skipping the step (b) and executing the step (c) if the SIP control block is present.

## Patentansprüche

1. IP-Telefon-Vorrichtung, die eine simultane SIP-Kommunikation für mehrere als IP-Telefone genutzte Telefone unterstützt, die IP-Telefon-Vorrichtung (10) umfassend:
einen Netzwerk-Verbindungs-Anschluss (41), der mit einem Netzwerk verbunden ist;
eine Vielzahl von Telefon-Verbindungs-Anschlüssen (42), die mit einer Vielzahl von Telefongeräten verbunden sind; und
eine Stimmen-Kodier-Einheit (46), die mit den Telefon-Verbindungs-Anschlüssen (42) verbunden ist und dazu verwendet wird, ein Stimmsignal in digitale Stimmpakete und digitale Stimmpakete in ein Stimmsignal zu konvertieren;
die IP-Telefon-Vorrichtung ist **gekennzeichnet durch** eine IP-Telefon-Zuordnungseinheit (47) die mit dem Netzwerk-Verbindungs-Anschluss (41) und der Vielzahl von Telefon-Verbindungsanschlüssen (42) verbunden ist, wobei die IP-Telefon-Zuordnungseinheit (47) eingerichtet ist, einen SIP Kontrollblock zu erzeugen, der einen SIP Rufabschnitt für eine lokale SIP Nummer umfasst, und den SIP Kontrollblock dem SIP Rufabschnitt entsprechend einem Ziel-Telefongerät zuzuordnen, wobei den Telefongeräten durch die IP-Telefon-Vorrichtung ermöglicht wird, eine bidirektionale digitale Stimmpaketübertragung mit einer entfernten SIP Nummer einzugehen.

2. IP-Telefon-Vorrichtung nach Anspruch 1, wobei die IP-Telefon-Vorrichtung (10) ein IP-Portal, ein ADSL Modem, ein Kabelmodem oder ein drahtloser Netwerkzugangspunkt ist.

3. IP-Telefon-Vorrichtung nach Anspruch 1, wobei das Netzwerk Internet ist.

4. IP-Telefon-Vorrichtung nach Anspruch 1, wobei der Netzwerk-Verbindungs-Anschluss eine RJ-45 Buchse ist.

5. IP-Telefon-Vorrichtung nach Anspruch 1, wobei jeder der Telefon-Verbindungs-Anschlüsse eine PSTN RJ-11 Buchse ist.

6. IP-Telefon-Vorrichtung nach Anspruch 1, wobei die Stimmen-Kodier-Einheit (46) ein digitaler Signalprozessor ist.

7. IP-Telefon-Vorrichtung nach Anspruch 1, weiter umfassend:
eine FXS (Foreign eXchange Station) Schnittstelle (43), die zwischen die Telefon-Verbindungs-Anschlüsse (42) und die Stimmen-Kodier-Einheit (46) geschaltet ist und ein FXS Simulationssignal erzeugt zum Simulieren eines PSTN Telefonleitungssignals, wobei die Telefon-Verbindungs-Anschlüsse (42) direkt mit den Telefongeräten, Faxgeräten oder einer Telefonleitung einer Sammelanschlussleitung (PBX) verbunden sind.

8. IP-Telefon-Vorrichtung nach Anspruch 1, weiter umfassend:
eine Vielzahl von Telefonleitungs-Verbindungs-Anschlüssen (44) zu Erweiterungsleitungen einer Sammelanschlussleitung (PBX) oder Telefonleitungen einer Zentralvermittlungsstelle; und
eine FXO (Foreign eXchange Office) Schnittstelle (45), die zwischen die Telefonleitungs-Verbindungs-Anschlüsse (44) und die Stimmen-Kodier-Einheit (46) geschaltet ist, und ein FXO Simulationssignal erzeugt, das ein Telefongerätsignal simuliert.

9. IP-Telefon-Vorrichtung nach Anspruch 1, wobei die IP-Telefon-Zuordnungseinheit (47), ein SIP Prozessor ist, um SIP Telefonpakete zu verarbeiten.

10. IP-Telefon-Vorrichtung nach Anspruch 1, wobei der SIP Rufabschnitt ein Anruf-von-Feld, ein Arn-uf zu-Feld und ein Anruf-ID-Feld aufweist.

11. Verfahren zum Bereitstellen einer simultanen Kommunikation für eine Vielzahl von als IP-Telefonen verwendeten Telefonen, wobei das Verfahren bei einer IP-Telefon-Vorrichtung (10) verwendet wird, die mit einem Netzwerk und einer Vielzahl von Telefongeräten verbunden ist, wobei die IP-Telefon-Vorrichtung (10) ein SIP Protokoll anwendet und eine lokale SIP Nummer zur Kommunikation nutzt und wobei das Verfahren die Schritte umfasst:
(a) Wählen einer entfernten SIP Nummer mit zumindest einem Telefongerät;
(b) Finden einer lokalen SIP Nummer zur Kommunikation mit der entfernten SIP Nummer mit Hilfe von Abbildungs-Richtlinien Mitteln;
wobei das Verfahren **gekennzeichnet ist durch**:
(c) Erzeugen zumindest eines SIP Kontrollblocks, der einen SIP Rufabschnitt für die lokale SIP Nummer enthält; und
(d) Zuordnen des SIP Kontrollblocks zu dem wählenden Telefongerät dem SIP Rufabschnitt entsprechend und Herstellen einer bidirektionalen digitalen Stimmpaketübertragung zwischen dem wählenden Telefongerät und der entfernten SIP Nummer.

12. Verfahren nach Anspruch 11, wobei die IP-Telefon-Vorrichtung (10) ein IP-Portal, ein ADSL Modem, ein Kabelmodem oder ein drahtloser Netwerkzugangspunkt ist.

13. Verfahren nach Anspruch 11, wobei das Netzwerk Internet ist.

14. Verfahren nach Anspruch 11, wobei das Telefongerät ein PSTN Telefongerät ist.

15. Verfahren nach Anspruch 11, wobei der SIP Rufabschnitt in Schritt (c) ein Anruf von-Feld, ein Anruf-zu-Feld und ein Anruf-ID-Feld aufweist.

16. Verfahren nach Anspruch 11, vor Schritt (c) weiter umfassend die Schritte:
Prüfen, ob ein SIP Kontrollblock vorhanden ist;
Ausführen des Schritts (c), falls kein SIP Kontrollblock vorhanden ist; und
Überspringen von Schritt (c) und Ausführen von Schritt (d), wenn der SIP Kontrollblock vorhanden ist.

17. Verfahren zum Bereitstellen einer simultanen Kommunikation für eine Vielzahl von als IP-Telefonen verwendeten Telefonen, wobei das Verfahren bei einer IP-Telefon-Vorrichtung (10) verwendet wird, die mit einem Netzwerk und einer Vielzahl von Telefongeräten verbunden ist, wobei die IP-Telefon-Vorrichtung (10) ein SIP Protokoll anwendet und eine lokale SIP Nummer zur Kommunikation nutzt und wobei das Verfahren die Schritte umfasst:
(a) Empfangen eines Telefonanrufs von einer entfernten SIP Nummer zum Rufen einer lokalen SIP Nummer;
wobei das Verfahren **gekennzeichnet ist durch**:
(b) Erzeugen zumindest eines SIP Kontrollblocks, der einen SIP Rufabschnitt für eine Telefongruppe enthält, die eine Vielzahl von Telefongeräten enthält, zum Anklingeln aller Telefongeräte der Telefongruppe;
(c) falls bei einem Telefongerät der Telefongruppe abgehoben wird, Zuordnen des SIP Kontrollblocks zu dem abgehobenen Telefongerät und blockieren des SIP Kontrollblocks gegenüber einem Verbinden mit den anderen Telefongeräten, um eine bidirektionale digitale Stimmpaketübertragung zwischen dem abgehobenen Telefongerät und der entfernten SIP-Nummer herzustellen.

18. Verfahren nach Anspruch 17, wobei die IP-Telefon-Vorrichtung (10) ein IP-Portal, ein ADSL Modem, ein Kabelmodem oder ein drahtloser Netwerkzugangspunkt ist.

19. Verfahren nach Anspruch 17, wobei das Netzwerk Internet ist.

20. Verfahren nach Anspruch 17, wobei das Telefongerät ein PSTN Telefongerät ist.

21. Verfahren nach Anspruch 17, wobei der SIP Rufabschnitt ein Anruf-von-Feld, ein Anruf-zu-Feld und ein Anruf-ID-Feld aufweist.

22. Verfahren nach Anspruch 17, vor Schritt (b) weiter umfassend die Schritte:
Prüfen, ob ein SIP Kontrollblock vorhanden ist;
Ausführen des Schritts (b), falls kein SIP Kontrollblock vorhanden ist; und
Überspringen von Schritt (b) und Ausführen von Schritt (c), wenn der SIP Kontrollblock vorhanden ist.

## Revendications

1. Appareil de téléphonie IP fournissant une communication SIP simultanée pour de multiples téléphones utilisés en tant que téléphones IP, l'appareil de téléphonie IP (10) comprenant :
un port de connexion à un réseau (41) connecté à un réseau ;
une pluralité de ports de connexion à des téléphones (42) connectés à une pluralité de postes téléphoniques ; et
une unité de codec vocal (46) connectée aux ports de connexion à des téléphones (42) et utilisée de façon à convertir un signal vocal en un paquet vocal numérique et à convertir un paquet vocal numérique en un signal vocal ;
l'appareil de téléphonie IP étant **caractérisé en ce qu'**il comprend une unité d'attribution de téléphonie IP (47), qui est connectée au port de connexion à un réseau (41) et à la pluralité de ports de connexion à des téléphones (42), dans lequel l'unité d'attribution de téléphonie IP (47) est adaptée de façon à créer un bloc de commande SIP qui contient une branche d'appel SIP d'un numéro SIP local, et à attribuer le bloc de commande SIP à un poste téléphonique de destination selon la branche d'appel SIP, dans lequel les postes téléphoniques sont autorisés par l'appareil de téléphonie IP à engager une transmission de paquet vocal numérique avec un numéro SIP distant.

2. Appareil de téléphonie IP selon la revendication 1, dans lequel l'appareil de téléphonie IP (10) est l'un d'une passerelle IP, d'un modem ADSL, d'un modem câble et d'un point d'accès à un réseau sans fil.

3. Appareil de téléphonie IP selon la revendication 1, dans lequel le réseau est Internet.

4. Appareil de téléphonie IP selon la revendication 1, dans lequel le port de connexion à un réseau (41) est une prise RJ-45.

5. Appareil de téléphonie IP selon la revendication 1, dans lequel chaque port de connexion à un téléphone (42) est une prise RTPC RJ-11.

6. Appareil de téléphonie IP selon la revendication 1, dans lequel l'unité de codec vocal (46) est un processeur de signaux numériques.

7. Appareil de téléphonie IP selon la revendication 1, comprenant en outre :
une unité d'interface FXS (Foreign eXchange Station) (43) connectée entre les ports de connexion à des téléphones (42) et l'unité de codec vocal (46) et qui produit un signal de simulation FXS destiné à simuler un signal de ligne téléphonique RTPC, grâce à quoi les ports de connexion à des téléphones (42) sont connectés directement à un poste téléphonique, à un fax ou à la ligne téléphonique d'un PBX.

8. Appareil de téléphonie IP selon la revendication 1, comprenant en outre :
une pluralité de ports de connexion à des lignes téléphoniques (44) connectés à des lignes d'extension du PBX ou à une ligne téléphonique d'un central téléphonique ; et
une unité d'interface FXO (Foreign eXchange Office) (45) connectée entre les ports de connexion à des lignes téléphoniques (44) et l'unité de codec vocal (46) et qui produit un signal de simulation FXO destiné à simuler un signal de poste téléphonique.

9. Appareil de téléphonie IP selon la revendication 1, dans lequel l'unité d'attribution de téléphonie IP (47) est un processeur SIP destiné à traiter un paquet de téléphone SIP.

10. Appareil de téléphonie IP selon la revendication 1, dans lequel la branche d'appel SIP comprend un champ appel en provenance, un champ appel vers et un champ ID d'appel.

11. Procédé destiné à fournir une communication simultanée pour de multiples téléphones utilisés en tant que téléphones IP, le procédé étant utilisé pour un appareil de téléphonie IP (10) connecté à un réseau et à une pluralité de postes téléphoniques, l'appareil de téléphonie IP (10) adoptant un protocole SIP et utilisant un numéro local SIP pour une communication, le procédé comprenant les étapes consistant à :
(a) composer un numéro SIP distant avec au moins un poste téléphonique ;
(b) trouver un numéro SIP local pour une communication avec le numéro SIP distant à l'aide de moyens de politique mappés ;
le procédé étant **caractérisé par** les étapes consistant à :
(c) créer au moins un bloc de commande SIP qui contient une branche d'appel SIP pour le numéro SIP local ; et
(d) attribuer le bloc de commande SIP au poste téléphonique qui compose selon la branche d'appel SIP et établir une transmission de paquet vocal bidirectionnelle numérique entre le poste téléphonique qui compose et le numéro SIP distant.

12. Procédé selon la revendication 11, dans lequel l'appareil de téléphonie IP (10) est l'un d'une passerelle IP, d'un modem ADSL, d'un modem câble et d'un point d'accès à un réseau sans fil.

13. Procédé selon la revendication 11, dans lequel le réseau est Internet.

14. Procédé selon la revendication 11, dans lequel le poste téléphonique est un poste téléphonique RTPC.

15. Procédé selon la revendication 11, dans lequel la branche d'appel SIP dans l'étape (c) comprend un champ appel en provenance, un champ appel vers et un champ ID d'appel.

16. Procédé selon la revendication 11, comprenant en outre, avant l'étape (c), les étapes suivantes consistant à :
examiner si un bloc de commande SIP est présent ;
exécuter l'étape (c) si le bloc de commande SIP n'est pas présent ; et
sauter l'étape (c) et exécuter l'étape (d) si le bloc de commande SIP est présent.

17. Procédé destiné à fournir une communication simultanée pour de multiples téléphones utilisés en tant que téléphones IP, le procédé étant utilisé pour un appareil de téléphonie IP (10) connecté à un réseau et à une pluralité de postes téléphoniques, l'appareil de téléphonie IP (10) adoptant un protocole SIP et utilisant un numéro local SIP pour une communication, le procédé comprenant les étapes consistant à :
(a) recevoir un appel téléphonique en provenance d'un numéro SIP distant pour appeler un numéro SIP local ;
le procédé étant **caractérisé par** les étapes consistant à :
(b) créer au moins un bloc de commande SIP qui contient une branche d'appel SIP pour un groupe de téléphones qui contient une pluralité de postes téléphoniques de façon à faire sonner tous les postes téléphoniques du groupe de téléphones ;
(c) quand un poste téléphonique du groupe de téléphones est décroché, attribuer le bloc de commande SIP au poste téléphonique décroché et empêcher le bloc de commande SIP d'établir une connexion avec les autres postes téléphoniques de façon à établir une transmission de paquet vocal numérique bidirectionnelle entre le poste téléphonique décrocher et le numéro SIP distant.

18. Procédé selon la revendication 17, dans lequel l'appareil de téléphonie IP (10) est l'un d'une passerelle IP, d'un modem ADSL, d'un modem câble et d'un point d'accès à un réseau sans fil.

19. Procédé selon la revendication 17, dans lequel le réseau est Internet.

20. Procédé selon la revendication 17, dans lequel le poste téléphonique est un poste téléphonique RTPC.

21. Procédé selon la revendication 17, dans lequel la branche d'appel SIP comprend un champ appel en provenance, un champ appel vers et un champ ID d'appel.

22. Procédé selon la revendication 17, comprenant en outre, avant l'étape (b), les étapes suivantes consistant à :
examiner si un bloc de commande SIP est présent ;
exécuter l'étape (b) si le bloc de commande SIP n'est pas présent ; et
sauter l'étape (b) et exécuter l'étape (c) si le bloc de commande SIP est présent.
